Europäisches Patentamt

(19) European Patent Office

Office européen des brevets

(11) Publication number: **0 158 999**
**B1**

(12) **EUROPEAN PATENT SPECIFICATION**

(45) Date of publication of patent specification: **17.01.90**

(21) Application number: **85104511.2**

(22) Date of filing: **13.04.85**

(51) Int. Cl.⁵: **G 02 C 7/02**

(54) **Color-imparting contact lens.**

(30) Priority: **16.04.84 US 600860**
**09.07.84 US 628868**

(43) Date of publication of application:
**23.10.85 Bulletin 85/43**

(45) Publication of the grant of the patent:
**17.01.90 Bulletin 90/03**

(84) Designated Contracting States:
**AT BE CH DE FR GB IT LI NL SE**

(56) References cited:
**WO-A-83/03480**
**US-A-3 679 504**

**PATENTS ABSTRACTS OF JAPAN, vol. 6, no. 217 (P-152)1095r, 30th October 1982; & JP-A-57 120 912 (TOOMEE SANGYO K.K.) 28.07.1982**

(73) Proprietor: **SCHERING CORPORATION**
**2000 Galloping Hill Road**
**Kenilworth New Jersey 07033 (US)**

(72) Inventor: **Knapp, Julius Z.**
**22 Foxwood Drive**
**Somserset New Jersey 08873 (US)**

(74) Representative: **von Kreisler, Alek, Dipl.-Chem. et al**
**Deichmannhaus am Hauptbahnhof**
**D-5000 Köln 1 (DE)**

Courier Press, Leamington Spa, England.

## Description

The present invention relates to a contact lens capable of imparting an apparent color change to a wearer's iris, while at the same time permitting visualization of the natural anatomy of the iris. This combination inexpensively provides a unique, natural-appearing cosmetic effect, without severely effecting the ability of the lens to transmit oxygen to the cornea.

Colored lenses currently on the market contain a tint throughout the entire section of the lens that covers the iris. While such lenses are capable of exhancing existing eye color or changing the color of light-colored eyes, they are not capable of causing fundamental color changes, for example, from dark brown to light blue.

Wichterle, in U.S. Patent No. 3,679,504 discloses a colored contact lens that can have a clear pupil section and a colored pattern simulating the iris deposited over the iris section. Wichterle discloses three methods of coloring his iris section:

(1) draw the colored pattern (col. 2, line 33), (col. 4, line 1), (col. 5, lines 5 to 14);

(2) print the pattern using a stamp (col. 2, line 35);

(3) provide a thin foil (e.g. color film copy) having the pattern (col. 2, lines 37 to 38), (col. 6, lines 15 to 18).

However, Wichterle fails to disclose or even vaguely suggest use of an intermittent pattern that leaves a substantial portion within the interstices of the pattern uncolored. Nor does Wichterle disclose or even vaguely suggest that the elements of the pattern be undiscernable to the ordinary viewer.

Wichterle's iris is far more difficult and expensive to produce than applicant's. Wichterle's iris must be very carefully drawn or reproduced by photographic means in order to look natural. Wichterle's technique of producing colored contact lenses is so impractical that applicant knows of no commercial lens so produced. On the other hand, to produce the present lens, all one has to do is deposit a pattern of small elements (e.g. dots) over the entire iris section, leaving some space between the dots. It is not necessary to accurately draw the fine detail of the iris, although the dots may be arranged in radial clusters to enhance the structure of the iris or be of different colors. Even these modifications are still not as difficult as attempting to imitate the entire iris as with Wichterle's method.

The present invention is based on the surprising discovery that a colored intermittant pattern deposited over the entire iris section of the lens, while leaving a substantial portion of the iris section uncolored, provides sufficient coloring to achieve the desired effect, yet allows visualization of the structure of the iris, thereby providing a natural appearance. It is possible to actually cause a fundamental color change (e.g., from dark brown to light blue) while still allowing visualization of the structure of the iris.

The invention comprises a corneal contact lens comprising a transparent pupil section, an iris section surrounding said pupil section, and a colored, opaque, intermittant pattern deposited over said entire iris section, characterized in that said pattern comprises colored dots covering at least 30 percent of the surface of said iris section but leaving the portion within the interstices of said dots uncolored, the dots having a size to be undiscernible to the ordinary viewer, thereby providing a lens capable of coloring the iris but permitting visualization of the structure of the iris of a person wearing said lens.

Figure 1 is a front view of a contact lens in accordance with the invention.

Figure 2 is an enlarged view of a dot pattern that may be deposited over the iris section of the lens of figure 1.

Figures 3 and 4 illustrate alternative dot patterns.

Figure 5 illustrates a plate that may be used for making lenses in accordance with the invention.

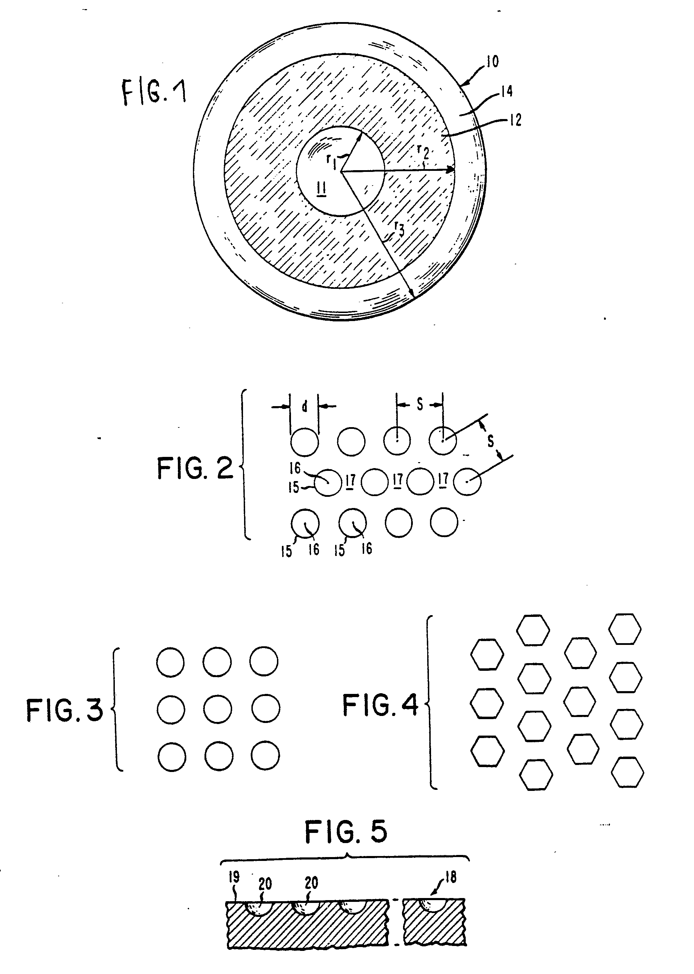

Colored contact lenses in accordance with the invention are shaped like other contact lenses, i.e., they have a concave rear surface adapted for wearing against the cornea and a convex front surface. Figure 1 is a front view of such a lens. Lens 10 has an uncolored, transparent pupil section 11 and an iris section 12 surrounding the pupil section. These sections cover corresponding parts of the eye of the wearer. Pupil section 11 and iris section 12 may have radii $r_1$ and $r_2$ of about 2.5 and 4.5 mm. respectively. If the lens is constructed of a hard material, such a polymethyl methacrylte, only the iris and pupil sections are usually present. However, if the lens is made of hydrophilic material, there is usually a transparent peripheral section 14 surrounding the iris section 12 having radius $r_3$, of, for example, about 7.25 mm.

To achieve the desired coloring effect, a colored, opaque, intermittant pattern is deposited over the entire iris section, shown shaded in figure 1. However, a substantial portion within the interstices of the pattern is left uncolored. Figure 2 illustrates a preferred pattern. A series of dots 15 are arranged to that their centers 16 form equilateral triangles. Each dot has a diameter d of 0.1 mm. The spacings s between the centers of the dots is 0.13 mm. Figure 2 is only diagrammatic, i.e. not drawn to scale. The dot size and spacing should be such that at least 30 percent of the surface area of the iris section is covered by the dots, more preferably about 50 percent. The uncovered portion 17 of the iris section, i.e., the portion of the iris section within the interstices of the pattern, is left uncolored. The size and spacing of the elements of the pattern (e.g. dots) should be such that the pattern is not visible to the naked eye when viewed from a distance of 1.5 m. (5 feet) by a person having normal 20—20 vision. The dots contain enough pigment so that each dot, itself, is opaque.

The invention allows the structure of the iris to be seen, yet the pattern provides enough covering so that the iris of the wearer appears to be the same color as the dots, regardless of the actual color of the iris.

Figures 3 and 4 show alternative dot patterns. In figure 3 the dots are arranged so that their centers form squares. In figure 5 the dots are hexagonally shaped. The exact shape and arrangement of the dots is not critical, provided that there are enough dots to achieve the desired coloring and enough space between the dots so that the structure of the iris is visible.

Lenses in accordance with the invention may be made as follows. A transparent contact lens comprising at least a pupil section 11 and an iris section 12 surrounding the pupil section is provided.

If the lens is constructed of a hydrophilic material, it also has a peripheral section 14 surrounding iris section 12. For hydrophilic material, the steps described below are performed with the material in an unhydrated state. Preferred hydrophilic materials are disclosed by Loshaek in U.S. Patent No. 4,405,773.

The colored pattern may be deposited onto iris section 12 of the lens in any manner. The currently preferred method is by offset pad printing, described below in some detail.

A plate 18 as shown in figure 5 is prepared having flat surface 19 and circular depressions 20 corresponding to the desired dot pattern. To make the pattern shown in figure 2, each depression 20 has a diameter of 0.1 mm. and a depth of .013 mm. The depressions are arranged to cover an annular shape corresponding to that of the iris section of the lens.

The plate may be made by a technique that is well known for making integrated analog or digital circuits. First a pattern about 100 times as large as the desired pattern is prepared. Next the pattern is reduced using well known photographic techniques to a pattern of the exact desired size having the dots darker than the undotted area. Flat surface 19 is covered by a photo resist material which becomes water insoluble when exposed to light. The photoresist material is covered with the pattern and exposed to light. The water soluble (dot) portion of the photo resist pattern is removed by washing with water and the resulting plate is etched to the required depth. Then the remainder of the photo resist material is mechanically removed.

Ink containing water-insoluble, opaque pigment is deposited on flat surface 19 of the plate and scraped across the dot pattern with a doctor blade. This causes depressions 20 to be filled with ink while removing excess ink from flat surface 19.

A pad made of silicon rubber, impregnated with silicon oil for easy release, is pressed against the dot pattern, removing ink from depressions 20. The ink on the pad is allowed to dry slightly to improve tackyness, then pressed against the front surface of the contact lens, depositing the ink in the desired pattern over the iris section. Of course the pad must have enough flexibility to deform to fit over the convex front surface of the lens. For a more natural effect, the printing step may be repeated one or more times using different patterns in different colors, since upon close examination the iris's of many persons are found to contain more than one color. The printed pattern need not be absolutely uniform.

Next the deposited pattern is treated to render it resistant to removal from the lens under exposure to the lacrimal fluid (tears) that the lens will encounter when placed in the eye. The exact method of preventing removal depends on the material of construction of the lens and the pattern. For non-hydrophilic lenses containing non-toxic pigments, mere air drying or heating the lens may suffice. For hydrophilic lenses, the techniques for coating the opaque pattern described in Wichterle's U.S. Patent No. 3,679,504 may be used.

It can be seen that the present invention provides lenses capable of coloring the appearance of the wearer's iris, while allowing visualization of the fine structure thereof. The invention has several advantages over prior art techniques:

1. A fundamental color change is possible without excessive interference with the oxygen transmissibility of the lens.

2. A natural appearance is achieved despite fundamental color change, because the structure of the iris is visible.

3. Because the pattern leaves a substantial portion of the iris uncoated, a coating over the pattern adheres better than that of Wichterle's in U.S. Patent No. 3,679,504.

4. The pattern appears continuous when viewed by an onlooker having 20—20 vision at a distance of 1.5 m. (5 feet).

**Claims**

1. A corneal contact lens comprising a transparent pupil (11), an iris section (12) surrounding said pupil section, and a colored, opaque, intermittant pattern deposited over said entire iris section, characterized in that said pattern comprises colored dots (15) covering at least 30 percent of the surface of said iris section (12) but leaving the portion (17) within the interstices of said dots uncolored, the dots having a size to be undiscernible to the ordinary viewer, thereby providing a lens capable of coloring the iris but permitting visualization of the structure of the iris of a person wearing said lens.

2. The lens of claim 1 constructed of a hydrophilic material and further comprising a transparent peripheral section surrounding said iris section.

3. A process for making a color-imparting contact lens comprising the steps of:

(a) providing a transparent contact lens having a pupil section and an iris section surrounding said pupil section,

(b) depositing colored opaque dots (15) onto a surface over the entire iris section, but leaving the portion (17) within the interstices of said dots uncolored, the dots covering at least 30 percent of the surface of the iris section; and

(c) treating the dot-pattern to render it resistant to removal from the lens.

4. The process of claim 3 wherein the lens is constructed of hydrophilic material and further comprises a transparent peripheral section surrounding the iris section, and steps (b) and (c) are performed before the lens is hydrated.

**Patentansprüche**

1. Hornhaut-Kontaktlinse, umfassend einen transparenten Pupillen-Abschnitt (11), einen den Pupillen-Abschnitt umgebenden Iris-Abschnitt (12) und ein gefärbtes, undurchsichtiges, regelmäßig unterbrochenes Muster, das über den gesamten Iris-Abschnitt hinweg abgelagert ist, dadurch gekennzeichnet, daß das Muster gefärbte Punkte (15) umfaßt, die wenigstens 30% der Oberfläche des Iris-Abschnitts (12) bedecken, jedoch den Teil (17) innerhalb der Zwischenräume zwischen den Punkten ungefärbt läßt, wobei die Punkte eine solche Größe haben, daß sie für den gewöhnlichen Betrachter nicht erkennbar sind, wodurch eine Linse bereitgestellt wird, die die Iris zu färben vermag, jedoch ein Sichtbarmachen der Struktur der Iris einer diese Linsen tragenden Person erlaubt.

2. Linse nach Anspruch 1, gefertigt aus einem hydrophilen Material und zweiter umfassend einen den Iris-Abschnitt umgebenden transparenten Umfangsabschnitt.

3. Verfahren zur Herstellung einer Farbe verleihenden Kontakt-Linse, umfassend die Schritte

(a) des Bereitstellens einer transparenten Kontaktlinse mit einem Pupillen-Abschnitt und einem den Pupillen-Abschnitt umgebenden Iris-Abschnitt,

(b) des Ablagerns gefärbter undurchsichtiger Punkte (15) auf einer Oberfläche über den gesamten Iris-Abschnitt, wobei jedoch der Teil (17) innerhalb der Zwischenräume zwischen den Punkten ungefärbt belassen wird, wobei die Punkte wenigstens 30% des Iris-Abschnitts bedecken, und

(c) des Behandelns des Punkt-Musters, um es gegenüber einem Entfernen von der Linse beständig zu machen.

4. Verfahren nach Anspruch 3, worin die Linse aus einem hydrophilen Material gefertigt ist und weiter einen den Iris-Abschnitt umgebenden transparenten Umfangsabschnitt umfaßt und die Schritte (b) und (c) vor dem Hydratisieren der Linse durchgeführt werden.

**Revendications**

1. Lentille de contact pour la cornée comprenant une section de pupille transparente (11), une section d'iris (12) entourant ladite section de pupille, et un schéma intermittent, opaque, coloré, disposé sur toute la section d'iris, caractérisée en ce que ledit schéma comprend des points colorés (15) qui couvrent au moins 30% de la surface de ladite section d'iris (12) mais qui laissent la porion (17) dans les interstices desdits points non colorée, les points ayant une taille les rendant indiscernables pour une personne ordinaire qui regarde, pour ainsi produire une lentille capable de colorer l'iris mais permettant la visualisation de la structure de l'iris d'une personne portant ladite lentille.

2. Lentille de la revendication 1 construite en une matière hydrophile et comprenant de plus une section périphérique transparente entourant ladite section d'iris.

3. Procédé de fabrication d'une lentille de contact impartissant une couleur comprenant les étapes de:

a) produire une lentille transparente de contact ayant une section de pupille et une section d'iris entourant ladite section de pupille,

b) déposer des points opaques colorés (15) sur une surface sur toute la section d'iris, mais laissant la portion (17) dans les interstices desdits points non colorée, les points couvrant au moins 30% de la surface de la section d'iris; et

c) traiter le schéma de points pour le rendre résistant à un enlèvement par rapport à la lentille.

4. Procédé de la revendication 3 où la lentille est construite en une matière hydrophile et comprend de plus une section périphérique transparente entourant la section d'iris, et les étapes (b) et (c) sont accomplies avant que la lentille ne soit hydratée.

FIG. 1

FIG. 2

FIG. 3

FIG. 4

FIG. 5